# EUROPEAN PATENT SPECIFICATION

(11) **EP 0 520 097 B1**
(45) Date of publication and mention of the grant of the patent: **02.11.1995**
(21) Application number: 91305554.7
(22) Date of filing: 19.06.1991
(51) Int. Cl.: C11B 3/14, B01D 3/10, B01D 3/24, B01D 3/38, B01D 1/02

(54) **An improved method and process of distillation/deodorisation of oils, fats and fatty acids**
Ein verbessertes Verfahren zur Destillation/Deodorisierung von Ölen, Fetten und Fettsäuren
Un procédé amélioré de distillation/déodorisation d'huile, de corps gras et d'acides gras

(43) Date of publication of application: 30.12.1992
(73) Proprietor: Panchal, Mulshankar Saburbhai, Post-Fategunj, Baroda-390002, Gujarat (IN)
(72) Inventor: Panchal, Mulshankar Saburbhai, Post-Fategunj, Baroda-390002, Gujarat (IN)
(74) Representative: Heath, Peter William Murray

(56) References cited:
- DE-A- 1 519 736
- DE-C- 826 748
- GB-A- 2 176 713
- US-A- 4 009 230

## Description

The present invention relates to an improved method and apparatus of distillation and deodorisation of oils, fats and fatty acids, particularly in creating a concentric cross flow of the feedstock with shallow weir waterfall formation.

When the oil or fat is heated, the flavour materials start to distil and if the heating is carried out under vacuum, the rate of distillation is increased and the oil or fat is protected from oxidation. Distillation is improved further by passing steam through the oil or fat. Deodorisation may well be described as a steam distillation under high vacuum. The refining step is sometimes referred to as neutralization because the main objective is to remove the free fatty acids, which have developed in the oil. Free fatty acids can be distilled in a current of steam under high vacuum, and at a temperature similar to that used in normal deodorisation of oils, fats or fatty acids. To keep the time of exposure to high temperature to a minimum, stills have been designed to expose only a thin layer of oil or fat or fatty acid to the distillation conditions, giving the maximum distillation efficiency.

In order to recover the distillate, the condensation system for the fatty acids and steam must be separated and an efficient high vacuum system installed to give absolute pressures of under 6.7 millibar (5 mm of mercury). Fatty acids and fatty acid vapours are very corrosive so that the plant must be made in the correct grade of stainless steel.

The requirements for vacuum, temperature, stripping steam and the time of exposure depend on the liquid head pressure exerted on volatile fatty acid molecules.

In the prior art designs by several manufacturers, an attempt is made to reduce the liquid head pressure by employing small size or volume apparatus and tray members. Even with this adaption, the liquid head pressure remains considerable, therefore requiring high processing temperature and energy. The longer exposure time of the oils or fats or fatty acids to high temperature results in slight deterioration of the quality of the oil or fat or fatty acid.

DE-A-1519736 and DE-A-826748 describe systems in which the feedstock is cascaded in a series of tray members and the product liquid flows from one chamber to the next chamber of the same tray through a pipe conduit system connected in the bottom of the tray. The liquid flows from one chamber to the next under a considerable hydrostatic head. For the removal of volatile molecules one wishes to keep the hydrostatic head to a minimum. In both the above German Specifications the chambers of the tray members are covered forming a closed box-like chamber providing a long passage and a lot of back pressure for the volatile molecules. In both the German Specifications the stripping steam is passed from one chamber to the next chamber of a tray member. The stripping steam once enriched by volatile odoriferous matter is no longer able to remove volatile matter any further from the next chamber since its stripping efficiency is considerably reduced.

GB-A-2176713 discloses apparatus in accordance with the introductory portion of Claim 1.

An object of the present invention is to provide a system in which the liquid head pressure exerted on the fatty matter molecules is reduced to a negligible level while providing a large surface area and sufficient agitation to increase the ebullition process. In the present invention the liquid flows from one chamber to the next in the form of concentric shallow weir waterfalls with the liquid in the form of thin film and a hydrostatic head reduced to negligible level. The tray members are open for easy escape of volatile matters and the stripping steam is used only once in each tray member.

Accordingly the present invention provides distiller/deodorizer apparatus for distilling and deodorising of liquid feedstock such as oil, fat or fatty acids, which comprises a first vessel including a plurality of open processing tray members arranged one above the other to achieve a shallow weir waterfall cascade effect of the feedstock liquid, inlet means for introducing liquid feedstock into the upper of the trays, steam feed means for introducing steam into the liquid feedstock in each tray, the arrangement being such that there is a cross flow of liquid with respect to the upflow of steam therethrough, heat exchanger means for heating the liquid feedstock before it is passed to the upper tray, vacuum generating means for creating a vacuum in the vessel, recovery means for extracting vapour from the vessel and recovering any fatty matter in the vapour, characterised in that
the heat exchanger means comprises a first heat exchanger located in the vessel adjacent the exit of the processed feedstock therefrom, whereby the feedstock to be fed to the upper tray is first heated and acts to cool the processed feedstock leaving the vessel, and a second heat exchanger external to the vessel and located in the feedstock path between the first heat exchanger and the inlet means to the upper tray,
the vacuum generating means is connected to both the upper and lower ends of the first vessel to create a balanced vacuum under the influence of which the feedstock is moved through the first vessel, and the recovery means includes a vapour scrubber vessel defining a liquid sump and a perforated distribution member through which vapour is passed into the liquid sump.

The invention also relates to a method of distillation and deodorisation of oils, fats or fatty acids.

Additional features of the apparatus include a cleaning in-place (CIP) cleaning system for efficient cleaning, and a drain valve mechanism below and along each processing tray and the bottom of the first vessel.

In order for the present invention may be more readily understood, the following description is given, by way of example only, with reference to the following drawings, in which:-
Figure (1) shows the overall sectional view of the invention, revealing the relative assembly of the various components making up the invention;
Figure (2) shows the cross-sectional views of an external heat exchanger apparatus and an improved distiller/deodorizer apparatus:
Figure (3) shows the cross section view of a processing tray member in an improved distiller/deodorizer apparatus, fitted with a multi-port drain valve mechanism;
Figure (4) shows the cross section view of an improved vapour scrubber apparatus;
Figure (5) shows the cross section view of an external heat exchanger apparatus to the improved distiller/deodorizer apparatus.

### DETAILED DESCRIPTION

Referring to Figure (1), an improved distiller/deodorizer apparatus (10) is substantially of a vertical cylindrical shape having a series of processing tray members (80) and a final stage heat exchange means (90). This basic unit (10) must be vacuum tight connected to a high vacuum lines (35) and is preferably all welded construction to ensure the absence of leaks. A feedstock of oil or fat is first pre-heated through the final stage heat exchange means (90) in the distiller/deodorizer apparatus (10), and then an external heat exchanger means (20). An economizer member (60) is installed to heat water by making use of the heat from the flue gas generated from a heater member (50). The heater member (50) supplies the heating medium to the external exchanger apparatus (20).

The volatile fatty vapours issuing from the distiller/deodorizer apparatus (10) is fed under vacuum to a vapour scrubber apparatus (30). The scrubber apparatus (30) which, installed in the vapour main (70), will wash the vapours with a spray of fatty acid, condensing the distillate and trapping droplet carry over, allowing only a fat-free vapour to pass to the high vacuum set (not shown).

Now referring to Figure (5), the external heat exchanger apparatus (20 is of a cylindrical shape, with a series of circular heating coils (21) connectable in a horizontal spiral fashion to the inlet (22) and outlet (23) header nozzle members, through which the heating medium flows. Inside the heat exchanger apparatus (20) is positioned a concentric channel (25) with a closed bottom (24) attached to the inside wall. The heating coils (21) are placed in the cavity of the this concentric channel member (25). The feedstock to be further heated is supplied via an inlet (310) at the bottom section (26) of the concentric channel (25), and flows upwardly across the heating coils (21) in counter current flow direction to that of the heating medium. The heat feedstock moves upwards under the influence of vacuum (27) supplied at the top end of the exchanger apparatus (20), and cascades down a central opening (28) defined by the central partition (25) in the form of thin concentric film, and into an outlet pipework (29) connectable to an improved distiller/deodorizer apparatus (10). A drain valve (311) is placed between the inlet (310) and the outlet (29).

Referring to Figure (2), the improved distiller / deodorizer apparatus (10) is of a vertical, cylindrical shape, with a series of processing tray members (80) and a final stage heat exchange means (90) installed inside the vessel. The size and the number of the processing tray members (80) depend on the capacity of the distillation and deodorisation required. The bottom section of the vessel is flat-bottomed and a multi-port drain valve mechanism (100) is installed at the bottom end of the vessel. Three channel members are shown inside at the bottom end of the vessel. The number of channel member also depends the capacity and type of the feedstock. In each concentric channel is interposed a concentric partition member (91), slightly raised from the bottom and leaving a space for fluid communication within the channel member. These partition members (91) allow the feedstock to flow in a U-shaped direction, instead of flowing by the shortest path. The feedstock will then cascade inwardly into the next innermost channel member. This sequence is then repeated. In this final stage heat exchange means (90), a series of heating coils (92) is placed inside the cavities defined by the concentric channel members and the partition members (91). The feedstock is pumped from the inlet pipe (14A) at the bottom of the vessel into the innermost coil, flowing outwardly concentrically inside the vessel into an outlet pipe (16) at the side of the vessel connectable to the external heat exchanger apparatus (20).

After the step of distillation / deodorisation is completed, the processed feedstock flows by gravity from the processing tray members (80) downwardly into an inlet pipe (18) which is connectable to the outmost channel member of the tray member (80). Here, the processed feedstock flows from the outermost channel member inwardly and concentrically to the innermost channel member. Finally, the processed feedstock exits the vessel through a funnel of a outlet riser pipe (15).

Preferably the heat transfer mode is achieved through a counter-flow arrangement. In this way, the outgoing processed feedstock is used to pre-heat the incoming feedstock, without inter-mixing.

In order to maintain a constant temperature heat during the process of distillation / deodorisation, a heating coil means is provided at each outermost channel member of each processing tray member. The inlets of the coils are connectable to a common inlet header member (13) and the outlets are connectable to another common header member (14) for circulating the heating medium.

Referring to Figure (3), each processing tray member (80) is having a multiple concentric channel ( 87, 88, 89 ) member arranged with a stepped sloping bottom (A, B, C). The feedstock flows by gravity from the outermost channel member inwardly and concentrically. The number and size of the processing tray members (80) depend on the type of the feedstock and the capacity of the processing plant. In each channel member, a baffle plate member (86) is provided slightly raised from the stepped bottom, so that the feedstock will flow at the base of the baffle plate member (86) in a U-shaped manner upward, and while rising up in the second concentric ring (82) defined in the first channel member (89), the feedstock cascades in a shallow weir waterfall. Some of the feedstock will impinge (84) on the upper end of the next baffle member (86) in the next channel member, while the majority of the feedstock flows down the third concentric cavity (83) defined in the second tray member (88). Turbulence and shallow weir reduced the liquid head pressure exerted on the fatty acid molecules. This cascading and impinging action takes place a couple of times, until the feedstock is exited to the next processing tray member (80).

Also provided at the base of each channel member is a series of perforated coil (5), which allows high pressure steam from inlet pipes (312) to escape. The flow of this stripping steam runs in counter direction to the downward flow of the feedstock at the cascading points. Fatty molecules become very volatile in the shortest possible time and with minimum energy consumption.

A plurality of down comer pipes (6) with a funnel is connectable to the innermost channel member (87) and allows the processed feedstock to move on to the next processing tray member (80). Preferably the number of the down comer pipes is four per tray member and they are placed at a equi-distanced interval on the same circumference. Also a multiple port drain valve mechanism (200) is connected to the base of each tray member (80) in a sloping fashion and connectable to the outgoing pipework to the next processing tray member. To facilitate a quick and easy drainage of the feedstock, preferably a conical valve and a valve seat arrangement is provided at each drain connection. All the conical valves are operable by a common spindle means either manually by hand wheel mechanism or automatically by actuator means. The flange connexion members (8) & (9) are provided for easy assembly and maintenance of the drain valve mechanism. Each drain valve mechanism is connectable to a drain pipe member (6A) for draining the feedstock to the outermost channel member of the next processing tray member.

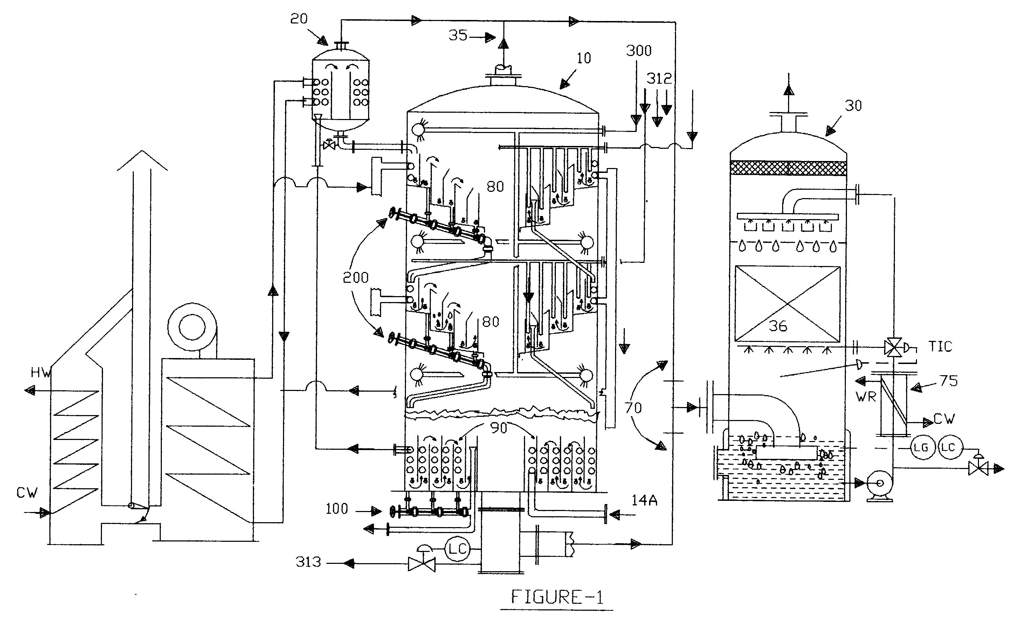

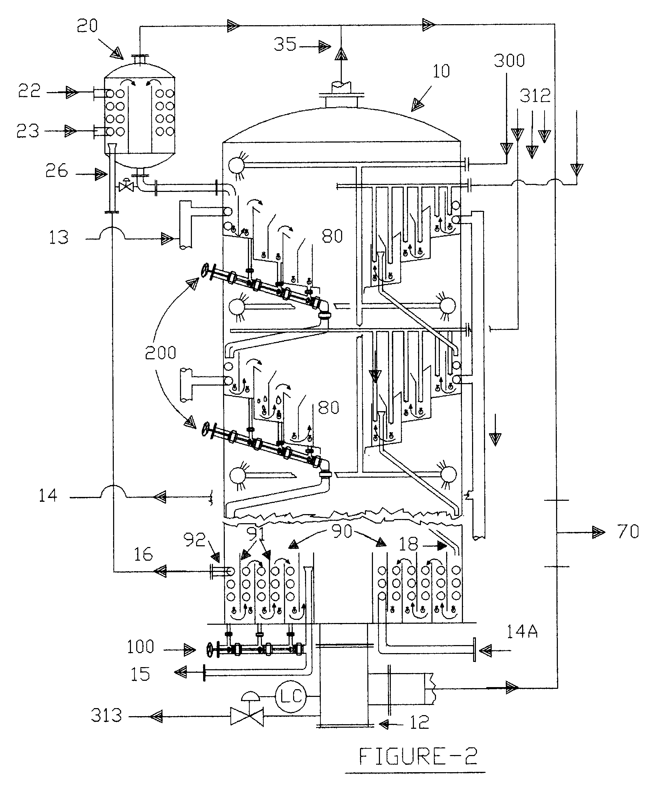

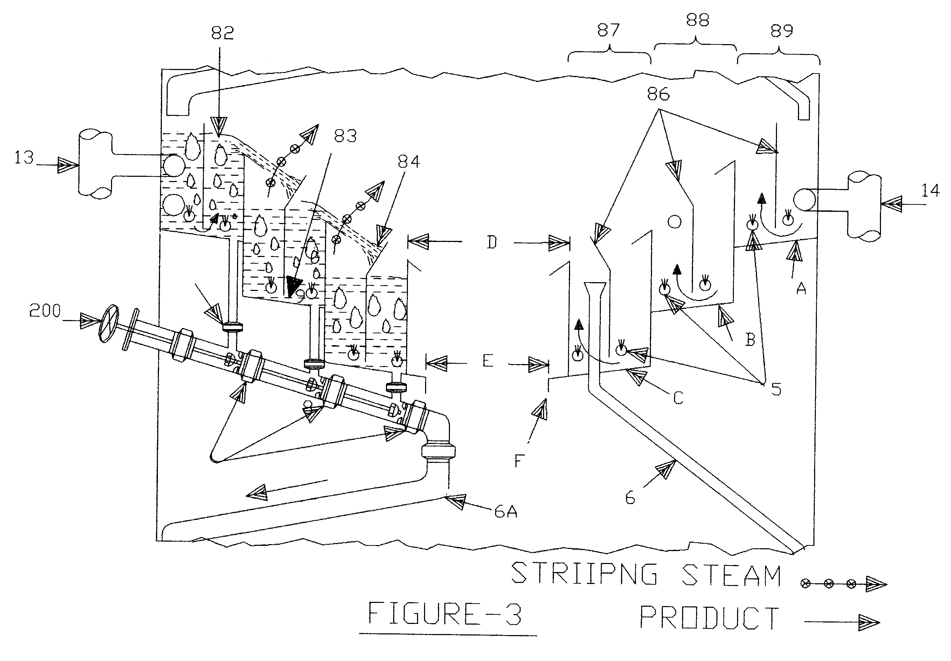

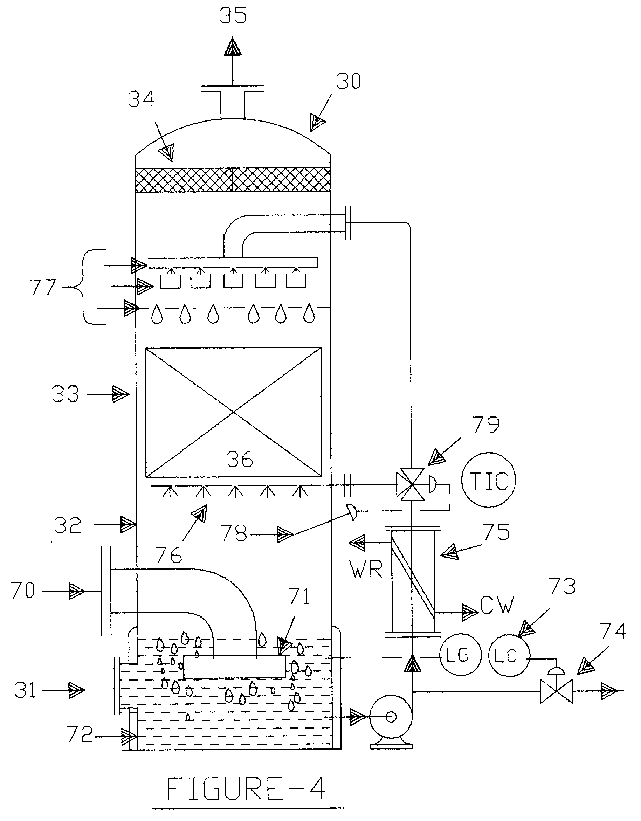

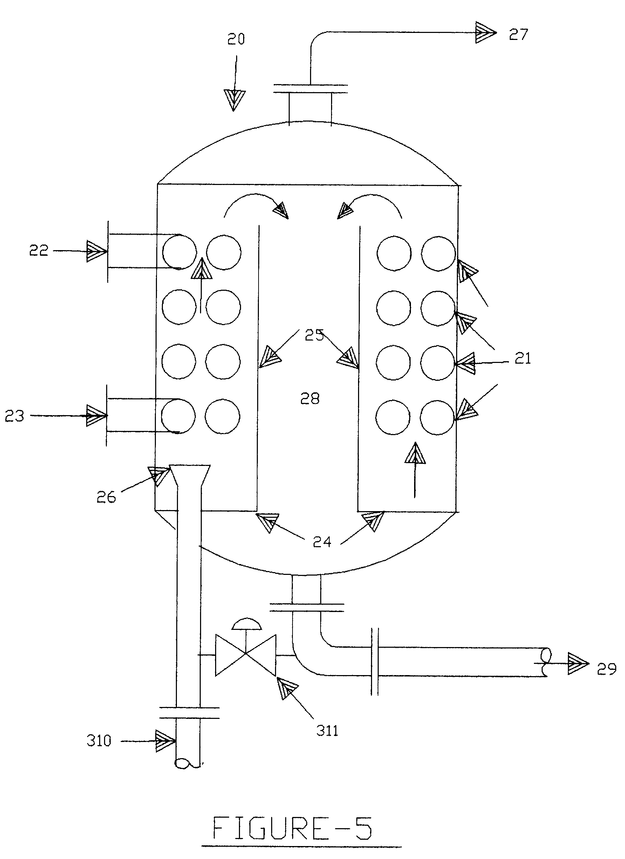

This multiple port drain valve mechanism (200) is preferably provided at each processing tray member (80), and the final stage heat exchange means (90) inside the distiller / deodorizer vessel (10). The number of ports depend on the number of the channel members in each respective tray member. Preferably, each drain stem has either a gland sealing stuffing box mechanism or maintenance free bellow seals to prevent leakage. Some volatile fatty vapour will condense underneath the bottom (A.B.C.) of the tray member (80) and because of the slope, the condensed liquid will run off the circular edge of the central ring opening (F) in each tray member. It is important that the diameter (E) of this central ring opening (F) is substantially smaller than the inner diameter (D) of the innermost channel member. This way, the condensate dripping from the central ring opening (F) will fall directly into a collection pot member (12) at the bottom of the distiller / deodorizer vessel. (Figure 2) The condensate does not fall into the next lower tray member and is prevented from contaminating the product in the next tray member.

A level controller means is provided in a collection pot member (12) to discharge the distillate intermittently for recycling via outlet (313). Again referring back to Figure (1), a circumferential spray nozzle ring member is provided over each processing tray member as well as the final stage heat exchange mean (90). Each of these spray nozzle ring members is connectable to a common header member located in the central opening of the distiller/deodorizer vessel (10). High pressure cleaning solution (300) is sprayed to clean the internal surfaces, avoiding manual scraping and cleaning. As the strength of the cleaning solution is maintained, it is not required to replenish the cleaning solution.

Reverting to Figure (1), a balanced vacuum is supplied to both ends of the distiller/deodorizer vessel (10) through a pipe work (70) of substantially larger diameter. This pipework (70) is connectable to an improved vapour scrubber member (30).

Referring now to Figure (4), an improved vapour scrubber member (30) is also vertically cylindrical in shape. The scrubber member (30) comprises a bottom section (31) as a sump for re-circulation liquid, a middle section (32) as a spray section for washing and cooling of vapours, and a top section (33) as a section with column packing for and wash liquid distribution system for final scrubbing of the vapours. These sections may be arranged in series as an individual item apparatus or in a different sequence.

The vapours from the improved distiller / deodorizer vessel (10) enters the improved vapour scrubber member (30) at the inlet connection member (70) and escapes through a perforated distribution box member (71) submerged in a sump (72). The liquid level in the sump (72) is adjustable by a level control means (73) for adjusting the hydrostatic pressure head on the vapour distribution box (71). The vapours coming from the distiller/deodorizer vessel (10) are entrained with a mist of fine fatty matter particles and volatile fatty vapours. As the vapour is bubbling through the perforated distribution box (71), the mist particles are trapped and condensed. The remaining vapours is washed in the spray section (32).

The wash liquid from the sump (72) is pumped through a cooler member (75) to spray nozzles (76) and distribution header member (77) above the column packing section (33). In the spray section (32),the vapour is also cooled by the spraying liquid to an optimum temperature with the help of a temperature sensor (78), a temperature controller and flow distribution valve (79). By cooling the vapours and the spray system further, volatile fatty vapours condense. The remaining trace fatty vapours are finally scrubbed in the column packing section (33) where the liquid is fed into a distribution channel member (77) overflowing on a perforated plate member for uniform distribution of wash liquid over the packing material (36).

Since the vapour is having a negligible loading on the system, the packing section (33) can achieve the highest efficiency. The uncondensable vapour and steam sucked out by a high vacuum system through a demister member (34) which prevents the carrying-over of wash liquid particles. By this method of bubbling the vapours through a sump (72), the major load is reduced on the system. The vapour temperature in the spray section (32) also cooled to an optimum level. This triple-stage vapour scrubber member (30) can achieve the highest efficiency.

## Claims

1. Distiller/deodorizer apparatus for distilling and deodorising of liquid feedstock such as oil, fat or fatty acids, which comprises a first vessel (10) including a plurality of open processing tray members (80) arranged one above the other to achieve a shallow weir waterfall cascade effect of the feedstock liquid, inlet means for introducing liquid feedstock into the upper of the trays, steam feed means (5, 312) for introducing steam into the liquid feedstock in each tray, the arrangement being such that there is a cross flow of liquid with respect to the upflow of steam therethrough, heat exchanger means (20, 90) for heating the liquid feedstock before it is passed to the upper tray (80), vacuum generating means (35, 70) for creating a vacuum in the vessel, recovery means (30) for extracting vapour from the vessel and recovering any fatty matter in the vapour, characterised in that
the heat exchanger means comprises a first heat exchanger (90) located in the vessel adjacent the exit of the processed feedstock therefrom, whereby the feedstock to be fed to the upper tray is first heated and acts to cool the processed feedstock leaving the vessel, and a second heat exchanger (20) external to the vessel and located in the feedstock path between the first heat exchanger and the inlet means to the upper tray,
the vacuum generating means is connected to both the upper and lower ends of the first vessel to create a balanced vacuum under the influence of which the feedstock is moved through the first vessel, and the recovery means includes a vapour scrubber vessel (30) defining a liquid sump (72) and a perforated distribution member (71) through which vapour is passed into the liquid sump.

2. Apparatus as claimed in Claim 1 characterised in that each processing tray member (80) is equipped with multiple concentric channel members (87, 88, 89) including baffle plate members (86), a sloping bottom design (A, B, C) and connection members (6, 6A), so that the flow of the feedstock will cascade inwardly or outwardly down the first vessel (10).

3. Apparatus as claimed in Claim 1 or Claim 2 characterised in that the series of processing tray members (80) is housed in a single first vessel or a plurality of first vessels.

4. Apparatus as claimed in Claim 1 or Claim 2 characterised by a multiple port drain valve mechanism (100, 200) installed below and along each processing tray member (80), and the bottom of the first vessel (10).

5. Apparatus as claimed in any one of Claims 1 to 4 characterised in that the series of processing tray members (80) are housed in one first vessel, and the central exit opening (E) of a first processing tray member is substantially smaller than the central entry opening (D) of a second processing tray member below the first tray member and subsequent to the flow of the feedstock.

6. Apparatus as claimed in any of the preceding Claims characterised in that the second, external heat exchanger apparatus (20) is equipped with a concentric channel (25) arrangement, containing heating coil members (21), and arranged such that the feedstock enters at the bottom section of the channel member (25), and rises up while being heated, and cascades/overflows downwardly and concentrically into an outlet (29) or a collection chamber member in the first vessel (10), the heat transfer being achieved by a counter flow arrangement.

7. Apparatus as claimed in any of the preceding Claims characterised in that the first heat exchanger (90) comprises concentric channel members, concentric partition members (91), and heat exchange coil members (92), such that the feedstock moves through inside the coil members (92), while the processed feedstock moves cross-wise through each concentric channel member and round partition members (91) in a longer flowpath, by a cascading action.

8. Apparatus as claimed in any of the preceding Claims characterised by including cleaning-in-place (CIP) system (300), comprising a series of nozzle spray ring members connectable to a supply header for a high pressure chemical recirculation, installed inside the first vessel (10).

9. Apparatus as claimed in any of Claims 1 to 8 characterised in that a vapour scrubber system (3) includes not only the sump system (72), but also a spray system (76), and a column packing system (36) housed in one vessel or separately in a plurality of vessels.

10. Apparatus as claimed in Claim 9 characterised in that the spray system (76) in the vapour scrubber system (3) is equipped with temperature control means, and flow diverting valve means (79) for optimum cooling of the vapour.

11. A method of distillation and deodorisation of oils, fats or fatty acids utilising the passage of steam therethrough comprising the step of heating a feedstock of oils, fats or fatty acids;
the step of cascading the heated feedstock in a series of open processing tray members (80) in a vessel (10) to which a vacuum is applied, achieving a shallow weir waterfall effect at each cascade with the formation of a cross flow with respect to the upflow of steam therethrough and the step of recovering any fatty matter in the issuing vapours;
characterised in that the heating is a two stage process, first in a final stage heat exchange means (90) in the vessel (10) and then in a second external heat exchange means (20) and in that the recovering of fatty matter from the vapours includes exiting the vapour through a perforated distribution member (71) into a liquid sump (72) in a vapour scrubber vessel (30); and in that the feedstock moves in the vessel (10) under the influence of a balanced vacuum (70) applied at the ends of the vessel (10).

## Patentansprüche

1. Destillier-/Deodorisier-Vorrichtung zum Destillieren und Deodorisieren von flüssigem Ausgangsmaterial, wie Öl, Fett oder Fettsäuren, mit einem ersten Behälter (10), beinhaltend mehrere, übereinander, zur Erlangung eines Oberflächenüberlauf-Wasserfall-Verregnungseffekts für das flüssige Ausgangsmaterial, angeordnete Prozeßbodenelemente(80), mit Zulauf-Vorrichtung(en) zum Hereinführen von flüssigem Ausgangsmaterial in den oberen Boden, Dampfzufuhreinrichtung(en) (5, 312) zum Einlassen von Dampf in das flüssige Ausgangsmaterial in jeder Stufe, so angeordnet, daß der aufsteigende Dampf durch die Flüssigkeit strömt, Wärmetauscheinrichtung(en) (20, 90) zum Erhitzen des flüssigen Ausgangsmaterials vor Eintritt in den oberen Boden, Vakuum-Erzeugungsorgan(en) (35, 70) zum evakuieren des Behälters, und mit Rückgewinnungsmittel(n) (30) um Dampf aus dem Behälter herauszuziehen und fetthaltige Bestandteile aus dem Dampf zurückzugewinnen,
dadurch gekennzeichnet, daß die Wärmetauscheinrichtung einen ersten, im Behälter in einem Abstand vom Ausgang für das verarbeitete Ausgangsmaterial angeordneten Wärmetauscher (90), durch welchen das in den oberen Boden einlaufende Ausgangsmaterial ein erstes Mal erhitzt wird und welcher eine Kühlung des verarbeiteten Ausgangsmaterials, welches den Behälter verläßt, bewirkt und einen zweiten, außerhalb des Behälters in der Ausgangsmaterialzuleitung zwischen dem ersten Wärmetauscher und dem Zulauf zum oberen Boden angeordneten Wärmetauscher (20) beinhaltet, daß das Vakuum-Erzeugungsmittel zur Erzeugung eines gleichmäßigen Vakuums, unter dessen Einfluß das Ausgangsmaterial durch den ersten Behälter bewegt wird, an sowohl das obere als auch das untere Ende des ersten Behälters angeschlossen ist, und daß die Rückgewinnungseinrichtung einen Dampfabscheidebehälter (30), welcher einen flüssigen Sumpf umschließt, und ein gelochtes Verteilungsorgan (71), durch welches der Dampf in den flüssigen Sumpf gelangt, enthält.

2. Vorrichtung nach Anspruch 1, dadurch gekennzeichnet daß jedes Prozeßbodenelement (80) mit mehreren konzentrischen Kanalelementen (87, 88 89) ausgestattet ist, welche Zwischenwände, eine abfallende Bodenanordnung (A, B, C) und Verbindungsmittel (6, 6A) beinhalten, so daß das Ausgangsmaterial im ersten Behälter (10) einwärts oder auswärts nach unten regnet.

3. Vorrichtung nach einem der Ansprüche 1 oder 2, dadurch gekennzeichnet, daß die Reihe von Prozeßbodenelementen (80) sich in einem einzelnen ersten Behälter oder in einer Mehrzahl von ersten Behältern befindet.

4. Vorrichtung nach Anspruch 1 oder Anspruch 2, gekennzeichnet durch einen unterhalb und entlang jedes Prozeßbodens (80) sowie der Sohle des ersten Behälters (10) installierten Mehrwegablaßventil-Mechanismus (100, 200).

5. Vorrichtung nach einem der Ansprüche 1 bis 4, dadurch gekennzeichnet, daß die Reihe von Prozeßbodenelementen (80) in einem ersten Behälter angeordnet sind und daß die zentrale Ausgangsöffnung (E) eines ersten Prozeßbodenelements bedeutend kleiner ist als die zentrale Eingangsöffnung (D) eines unter dem ersten Bodenelement liegenden und in Flußrichtung des Ausgangsmaterials anschließenden zweiten Prozeßbodenelements.

6. Vorrichtung nach einem der vorhergehenden Ansprüche, dadurch gekennzeichnet, daß die zweite, externe Wärmetauschvorrichtung (20) mit einer konzentrischen, Heizschlangenelemente (21) enthaltenden Kanalanordnung (25) versehen ist, welche so angeordnet ist, daß das Ausgangsmaterial im unteren Bereich der Kanäle (25) eintritt und während des Erhitzens aufsteigt und dann abwärts und konzentrisch in einen Abfluß (29) oder ein Sammelkammerelement im ersten Behälter (10) abregnet/überfließt, wobei der Wärmetransport durch eine Gegenstromanordnung erreicht wird.

7. Vorrichtung nach einem der vorhergehenden Ansprüche, dadurch gekennzeichnet, daß der erste Wärmetauscher (90) konzentrische Kanalisierungsmittel, konzentrische Trennwände (91) und Wärmeaustauschrohrelemente (92) enthält, so daß sich die Ausgangsflüssigkeit innerhalb der Rohrelemente (92) bewegt, während das verarbeitete Ausgangsmaterial kreuzweise durch jeden konzentrischen Kanal auf einem längeren Weg kaskadenförmig um die Trennwände (91) fließt.

8. Vorrichtung nach einem der vorhergehenden Ansprüche, gekennzeichnet durch ein Vorort-Reinigungssystem (cleaning-in-place; CIP) (300), welches eine Reihe von Spraydüsen-Ringelementen zur Hochdruck-Chemikalienzirkulation enthält, welche mit einer Versorgungssammelleitung verbindbar innerhalb des ersten Behälters (10) installiert sind.

9. Vorrichtung nach einem der Ansprüche 1 bis 8, dadurch gekennzeichnet, daß ein Dampfabscheidersystem (3) nicht nur das Sumpfsystem (92), sondern auch ein Spraysystem (76) sowie ein Säulenfüllungssystem (36) enthält, welche in einem Behälter oder separat in einer Mehrzahl von Behältern angeordnet sind.

10. Vorrichtung nach Anspruch 9, dadurch gekennzeichnet, daß das Spraysystem (76) im Dampfabscheidesystem (3) mit Temperaturmeßelementen und flußumleitenden Ventilelementen (79) versehen ist zur optimierten Kühlung des Dampfes.

11. Verfahren zur Destillation und Deodorisierung von Ölen, Fetten oder Fettsäuren, unter Verwendung von hindurchströmendem Dampf, umfassend einen Erhitzungsschritt eines Ausgangsmaterials von Öl, Fett oder Fettsäuren, einen Verfahrensschritt des Herabregnens des erhitzten Ausgangsmaterials in einer Reihe von offenen Prozeßbodenelementen (80) in einem evakuierten Behälter (10), welche zur Erreichung eines Oberflächenüberlauf-Wasserfall-Effekts in jeder Kaskade so angeordnet sind, daß es zu einem Durchströmen mit aufsteigendem Dampf kommt, und einem Schritt der Rückgewinnung der fetthaltigen Bestandteile in dem ausströmenden Dampf,
dadurch gekennzeichnet, daß das Erhitzen ein zweistufiger Prozeß ist, zunächst in einer Endstufen-Wärmetauschvorrichtung (90) im Behälter (10) und dann in einer zweiten externen Wärmetauschvorrichtung (20), daß die Rückgewinnung der fetthaltigen Bestandteile des Dampfes das Austreten des Dampfes durch ein gelochtes Verteilungsorgan (71) in einen flüssigen Sumpf (72) in einem Dampfabscheidebehälter (30) beinhaltet und daß das Ausgangsmaterial sich in dem Behälter (10) unter dem Einfluß eines ausgeglichenen Vakuums (70) bewegt, welches an den Enden des Behälters (10) angeschlossen wird.

## Revendications

1. Appareil de distillation/désodorisation pour distiller et désodoriser une alimentation liquide telle qu'une huile, un corps gras ou des acides gras, qui comprend un premier récipient (10) comprenant une pluralité de plateaux de traitement ouverts (80) disposés l'un au-dessus de l'autre pour assurer un effet de cascade de chutes de liquide par-dessus un trop-plein peu élevé, des moyens d'admission pour introduire l'alimentation liquide dans le plus élevé des plateaux, des moyens d'admission de vapeur d'eau (5, 312) pour introduire de la vapeur d'eau dans l'alimentation liquide dans chaque plateau, l'agencement étant tel qu'il y ait un écoulement croisé du liquide par rapport au courant ascendant de vapeur d'eau dans l'agencement, des moyens d'échange de chaleur (20, 90) pour chauffer l'alimentation liquide avant qu'elle passe au plateau supérieur (80), un moyen générateur de vide (35, 70) pour créer un vide dans le récipient, un moyen de collecte (30) pour extraire la vapeur hors du récipient et collecter toute matière grasse dans la vapeur,
caractérisé en ce que :
les moyens d'échange de chaleur comprennent un premier échangeur de chaleur (90) installé dans le récipient à proximité de la sortie de l'alimentation traitée hors du récipient, de façon que l'alimentation à admettre dans le plateau supérieur soit d'abord chauffée et refroidisse l'alimentation traitée quittant le récipient, et un deuxième échangeur de chaleur (20) extérieur au récipient et installé dans le trajet de l'alimentation entre le premier échangeur de chaleur et le moyen d'admission au plateau supérieur, le moyen générateur de vide est raccordé à la fois aux extrémités supérieure et inférieure du premier récipient pour créer un vide équilibré sous l'influence duquel l'alimentation est mise en mouvement dans le premier récipient, et le moyen de collecte comprend un récipient laveur de vapeurs (30) définissant un carter à liquide (72) et un organe de distribution perforé (71) à travers lequel la vapeur est amenée dans le carter à liquide.

2. Appareil suivant la revendication 1, caractérisé en ce que chaque plateau de traitement (80) est équipé de canaux concentriques multiples (87, 88, 89) comprenant des plaques déflectrices (86), un fond en pente (A, B, C) et des éléments de raccordement (6, 6A) de façon que l'alimentation s'écoule en cascade vers l'intérieur ou l'extérieur en descendant dans le premier récipient (10).

3. Appareil suivant la revendication 1 ou 2, caractérisé en ce que la série de plateaux de traitement (80) est logée dans un premier récipient unique d'une pluralité de premiers récipients.

4. Appareil suivant la revendication 1 ou 2, caractérisé par un mécanisme à robinets de vidange et orifices multiples (100, 200) installés en dessous et le long de chaque plateau de traitement (80) et du fond du premier récipient (10).

5. Appareil suivant l'une quelconque des revendications 1 à 4, caractérisé en ce que la série de plateaux de traitement (80) est logée dans un premier récipient et l'orifice de sortie central (E) d'un premier plateau de traitement est sensiblement plus petit que l'orifice d'entrée central (D) d'un deuxième plateau de traitement disposé sous le premier plateau de traitement et lui succédant dans le sens d'écoulement de l'alimentation.

6. Appareil suivant l'une quelconque des revendications précédentes, caractérisé en ce que le second échangeur de chaleur extérieur (20) est muni d'un canal concentrique (25) contenant des boucles de chauffage (21) et est agencé de façon que l'alimentation entre par la section inférieure du canal (25) et s'élève, tandis qu'elle est chauffée, s'écoule en cascade par-dessus un trop-plein vers le bas et concentriquement jusque dans une sortie (29) ou une chambre de collecte dans le premier récipient (10), le transfert de chaleur étant réalisé par un montage à contre-courant.

7. Appareil suivant l'une quelconque des revendications précédentes, caractérisé en ce que le premier échangeur de chaleur (90) comprend des canaux concentriques, des cloisons concentriques (91) et des boucles d'échange de chaleur (92) de façon que l'alimentation passe au milieu des boucles (92), tandis que l'alimentation traitée passe en sens croisé par chaque canal concentrique et autour des cloisons (91) suivant un trajet d'écoulement plus long par effet de cascade.

8. Appareil suivant l'une quelconque des revendications précédentes, caractérisé en ce qu'il comprend un système de nettoyage monté à demeure (300) comprenant une série de rampes annulaires de pulvérisation pouvant être raccordées à un collecteur d'alimentation pour un recyclage chimique sous pression, installées à l'intérieur du premier récipient (10).

9. Appareil suivant l'une quelconque des revendications 1 à 8, caractérisé en ce qu'un laveur de vapeurs (30) comprend non seulement le carter (72), mais aussi un système de pulvérisation (76) et un système de garnissage de colonne (36) logé dans un récipient ou séparément dans plusieurs récipients.

10. Appareil suivant la revendication 9, caractérisé en ce que le système de pulvérisation (76) dans le laveur de vapeurs (30) est muni d'un dispositif de régulation de la température et d'un dispositif à robinets de déviation de l'écoulement (79) pour un refroidissement optimal des vapeurs.

11. Procédé de distillation et de désodorisation d'huiles, de corps gras ou d'acides gras exploitant le passage de vapeur d'eau dans ceux-ci et comprenant le stade de chauffage d'une alimentation d'huiles, de corps gras ou d'acides gras; le stade d'écoulement en cascade de l'alimentation chauffée dans une série de plateaux de traitement ouverts (80) dans un récipient (10) dans lequel le vide est entretenu, réalisant un effet de chute de liquide par-dessus un trop-plein peu élevé à chaque cascade avec formation d'un écoulement croisé par rapport à l'écoulement ascendant de la vapeur d'eau ainsi que le stade de collecte de toute matière grasse dans les vapeurs sortantes;
caractérisé en ce que :
le chauffage est un processus en deux étapes, d'abord dans un échangeur de chaleur de stade final (90) dans le récipient (10), puis dans un deuxième échangeur de chaleur extérieur (20) et en ce que la collecte de la matière grasse dans des vapeurs comporte la sortie des vapeurs à travers un distributeur perforé (71) dans un carter de liquide (72) contenu dans un laveur de vapeurs (30); et en ce que l'alimentation passe dans le récipient (10) sous l'influence d'un vide équilibré (70) entretenu aux extrémités du récipient (10).
